# EUROPEAN PATENT APPLICATION

(11) **EP 3 428 691 A1**
(43) Date of publication of application: **16.01.2019**
(21) Application number: 17181191.2
(22) Date of filing: 13.07.2017
(51) Int. Cl.: G01T 1/20

(54) **X-RAY DETECTOR AND METHOD OF MANUFACTURING SUCH A DETECTOR**

(71) Applicant: Koninklijke Philips N.V., 5656 AE Eindhoven (NL)
(72) Inventor: VAN OEKEL, Jacques Jules, 5656 AE Eindhoven (NL)
(74) Representative: de Haan, Poul Erik

(57) **Abstract**

The invention relates to an X-ray detector (200) for medical imaging and to a method of manufacturing such detector. The detector comprises a scintillator array layer (S) with at least a first (31, 51) and a second (32, 52) scintillator array element, an intermediate layer (33, 53) adapted to allow light (L) to pass. The array elements are embedded in a light reflector material (30, 50) with exception of the side of the array elements facing the intermediate layer; and a detection layer (34) with at least a first (34-1) and a second (34-2) detector pixel distanced apart from each other and configured to detect light generated in the scintillator layer. The scintillator layer, the intermediate layer, and the detection layer are arranged relative to each other such that light, which is generated in the scintillator array elements of the scintillator array layer by X-ray radiation, can propagate to the detection layer via the intermediate layer. The first scintillator array element is spatially aligned to the first detector pixel and wherein the second scintillator array element is spatially aligned to the second detector pixel. A further light reflector material is present in in contact with the intermediate layer and substantially extended (45, 55) towards the detection layer through the intermediate layer. This substantially reduces cross-over of light from a scintillator array element to an adjacent detector pixel.

## Description

### FIELD OF THE INVENTION

The invention relates to an X-ray detector for medical imaging, a detector arrangement, a medical imaging system, and a method of manufacturing such a detector.

### BACKGROUND OF THE INVENTION

Detectors for medical X-ray imaging collect image information (pixel data) in single images or sequences of images to obtain two-dimensional or three-dimensional medical images. The quality of the conversion of the projected X-ray shadow image into pixel data of the plurality of detector pixels is important to achieve a satisfying image quality. For example, such types of detectors are applied in X-ray imaging, for instance flat panel detectors, and in computed tomography. A detector can comprise a scintillator layer, which converts the incident radiation into visible light. For this purpose such scintillators comprise a luminescent material which re-emits the absorbed energy from the incident X-ray or ionized radiation in the form of light. This light can be received and detected by, for example, photodetectors, which then convert the detected light into electric signals for further processing. Such detector pixels can be equally sized and arranged in a defined geometric order with a same size and aligned along a vertical and horizontal dimension to form, for instance, two-dimensional detector arrays. In US 5,396,072 an X-ray image detector is described, which comprises a plurality of X-ray sensitive sensors. However, although the detector structure relates to geometric arrangement of sensor cells, the image data has shown to comprise at least a certain degree of contaminated signals. Light generated in one pixel element of the scintillator layer is detected by a corresponding photodetector but also may be detected by a neighboring photodetector. This is undesired cross-over of light and may lead to deterioration of image quality.

### SUMMARY OF THE INVENTION

Hence, there may be a need to further improve image quality for X-ray detectors in an arrangement of multiple detector pixels or sensor pixels.

The object of the invention is solved by the subject-matter of the independent claims, wherein further embodiments are incorporated in the dependent claims.

According to the invention, an X-ray detector for medical imaging is provided which comprises a scintillator array layer with at least a first and a second scintillator array element, an intermediate layer adapted to allow light to pass. The array elements are embedded in a light reflector material with exception of the side of the array elements facing the intermediate layer. A detection layer is present with at least a first and a second detector pixel distanced apart from each other and configured to detect light generated in the scintillator layer. The scintillator layer, the intermediate layer, and the detection layer are arranged relative to each other such that light, which is generated in the scintillator array elements of the scintillator array layer by X-ray radiation, can propagate to the detection layer via the intermediate layer. The first scintillator array element is spatially aligned to the first detector pixel and wherein the second scintillator array element is spatially aligned to the second detector pixel. Further light reflector material is present in contact with the intermediate layer and substantially extended towards the detection layer through the intermediate layer.

This has the advantage that the further light reflector material at least partly blocks unwanted light cross-over signals to adjacent or neighboring detector pixels. A certain detector pixel only or mainly detects light, which is originating in the correct or assigned scintillator array element. Therefore, only those X-ray radiation events can be considered for further image processing, which happen in the corresponding scintillator array element. This can lead to better image quality and resolution. It has the further advantage that light loss which may take place due to cross-over and, for the outer pixels of the detector, due to light escaping through the intermediate layer is reduced. A light increase of 7-10 % and a light cross-over signal reduction of more than 40% have been achieved by the invention. Light cross-over may be defined as the signal of the second detector pixel caused by light generated in the first scintillator array element divided by the signal of the first detector pixel caused by light generated in the first scintillator array element. A normal cross-over signal may be in the order of 12-16 % and this may be reduced to less than 6-8 % by the presence of the further reflector material.

Furthermore, the MTF and point spread function can be improved. The term MTF relates to "Modulation Transfer Function" and can be used as a measure for a quality of an image. The term "point spread function" describes the response of an imaging system to a point source or point object and can serve as an indication for the quality of an imaging system.

The term "X-ray detector" can relate to any arrangement, which uses a scintillator / detector pixel arrangement for reception and detection of X-ray and conversion into signals, which can be further processed, for instance, in an image processing device. In medical imaging, shadow images, which represent X-ray after irradiating a region of interest, are sampled and the spatial distribution across a certain plane is translated by the detector into, for instance, electric signals.

A scintillator layer comprises, e.g. for computed tomography applications, an array of multiple scintillator elements or scintillator pixels, which can be arranged next to each other.

The term "intermediate layer" relates, for instance, to a glue layer, which is arranged between the scintillator layer and the detection layer. An intermediate layer can improve mechanical stability of the detector arrangement and is at least partly light transparent and can reduce stress in the ceramic scintillator array element.

A "detection layer" can relate to an array or arrangement of a plurality of detector cells or sensors, which are able to receive and detect light, originated in the scintillators. The detection layer can further comprise readout means for providing a state of individual detectors to an external unit for further processing. For example, the detection layer can furthermore comprise a support substrate such as silicon.

"Detector pixels" can relate to active areas, which are sensitive to light and perform the process of sensing a light pulse or light quantum and translate it into, for instance, electric signals. The active areas can be surrounded by other elements of the detector, such as wiring components, a support substrate or similar.

In an example the intermediate layer has a thickness larger than 80 µm, or has a thickness larger than 125 µm. A thickness of higher than 80 µm has the advantage of reduced stress between the scintilator array and the detector layer. A thickness of larger than 100 µm, or even more preferred larger than 125 µm, has the advantage of even more reduced stress between the scintilator array and the detector layer.

In an example the further reflector material has a width, measured in a direction parallel to the detection layer, smaller than the space between the scintillator array elements. This has the advantage that a small misalignment of the reflector material with respect to the space between the scintillator array elements is allowed which makes the manufacturing process easier.

In an example the reflector material in the intermediate layer has a width w in the range of 50 - 90 % of the minimum space between the scintillator array elements. A width smaller than 50% of the minimum space between the scintillator array elements is undesirable because it would make the reflector too transparent for light.

In an example the intermediate layer is a glue layer.

In an example the further light reflecting material is substantially equivalent to the light reflecting material.

According to the invention, also a detector arrangement is provided that comprises a detector panel, which comprises at least one detector according to any of the above-mentioned examples. Further, a detector circuit for readout of detector pixel information is provided, and an interface for providing the detector pixel information to a processor, and a detector housing for supporting and arranging the detector panel, the detector circuit and the interface.

According to the invention, also a medical imaging system is provided that comprises an X-ray tube, and a detector arrangement as described above. Further, a support arrangement for attaching the X-ray source and the detector is provided. The X-ray source and detector arrangement are configured and arranged to acquire image information of a region of interest of an object.

According to the invention, also a method of manufacturing an X-ray detector for medical imaging is provided. The method comprises the steps of:
a) providing a scintillator array layer with at least a first and a second scintillator array element;
b) applying an intermediate layer on one side of the scintillator array layer, adapted to allow light to pass, in contact with the scintillator array layer;
c) reducing the intermediate layer to a temporary thickness;
   wherein the array elements are embedded in a light reflector material with exception of the side of the array elements facing the intermediate layer;
d) structuring the intermediate layer by substantially removing the intermediate layer at the position of the light reflector material;
e) applying further light reflector material adjacent the remainder of the intermediate layer thereby filling the structure; wherein the further light reflector material is in contact with the light reflector material;
f) removing excess further light reflector material and excess intermediate material from the intermediate layer to yield a final thickness of the intermediate layer;
g) providing a detection layer with at least a first and a second detector pixel distanced apart from each other and configured to detect light generated in the scintillator layer;
   wherein the scintillator layer, the intermediate layer, and the detection layer are arranged relative to each other such that light, which is generated in the scintillator array elements of the scintillator array layer by X-ray radiation, can propagate to the detection layer via the intermediate layer;
   wherein the first scintillator region is spatially aligned to the first detector pixel and wherein the second scintillator region is spatially aligned to the second detector pixel.
   In an example of the method a spacer is used to keep the intermediate layer and detection layer at a fixed distance after step g) and comprising the following additional steps:
h) filling the fixed distance with liquid intermediate layer material;
i) removing the spacer;
j) squeezing the intermediate layer and detection layer together to a desired distance thereby squeezing the liquid intermediate layer out;
k) solidifying the liquid intermediate layer by a curing step.

In a further example the desired distance is smaller than 10 µm. This has the advantage that the light cross-over is further minimized due to the relatively low distance between the further light reflection material and the detector layer.

### BRIEF DESCRIPTION OF THE DRAWINGS

Exemplary embodiments of the invention will be described in the following with reference to the following drawings:
Fig. 1 schematically shows an example of an X-ray imaging system.
Fig. 2 shows a schematic view of an example of a detector arrangement in a perspective view.
Fig. 3 schematically shows a simplified example of a known X-ray detector in a cross-section.
Figs. 4A and 4B show a schematic cross-sectional view of an X-ray detector according to the invention.
Figs. 5A to 5F show a schematic cross-sectional view of an X-ray detector during different steps of a method of manufacturing an X-ray detector according to the invention.
Fig. 6 schematically shows the steps of the method of manufacturing an X-ray detector according to the invention.

### DETAILED DESCRIPTION OF EMBODIMENTS

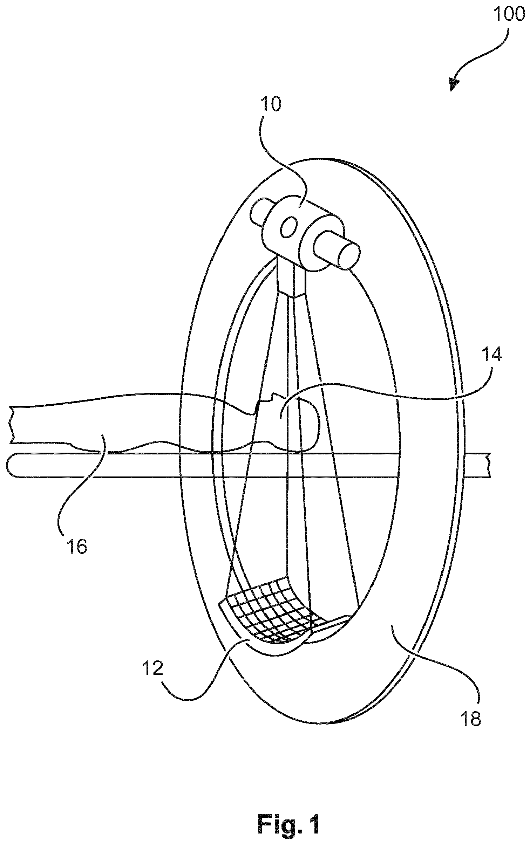

Fig. 1 shows an example of an X-ray imaging system for use, for instance, in hospital environments. In this example a computed tomography imaging system is shown, wherein a rotating X-ray tube is mounted opposite a detector arrangement 12, irradiating a region of interest 14 of an object 16. In order to achieve and maintain a correct position of the X-ray tube 10 and the detector arrangement 12, both elements are attached to a support arrangement 18. The support arrangement 18 can be, like in the current example, a gantry or any other mechanical means, like support arms or a C-arc, for supporting X-ray tube 10 and the detector arrangement 12.

The X-ray tube 10 generates X-ray and irradiates the region of interest 14. The detector arrangement 12 receives and detects shadow X-ray radiation after passing the region of interest 14. The detector arrangement 12 generates image information, which can be processed further, for example, in an image processing unit (not shown).

Examples for X-ray imaging systems can be conventional X-ray imaging, fluoroscopy, computed tomography, or spectral computed tomography, which can include fixed and/or movable detectors.

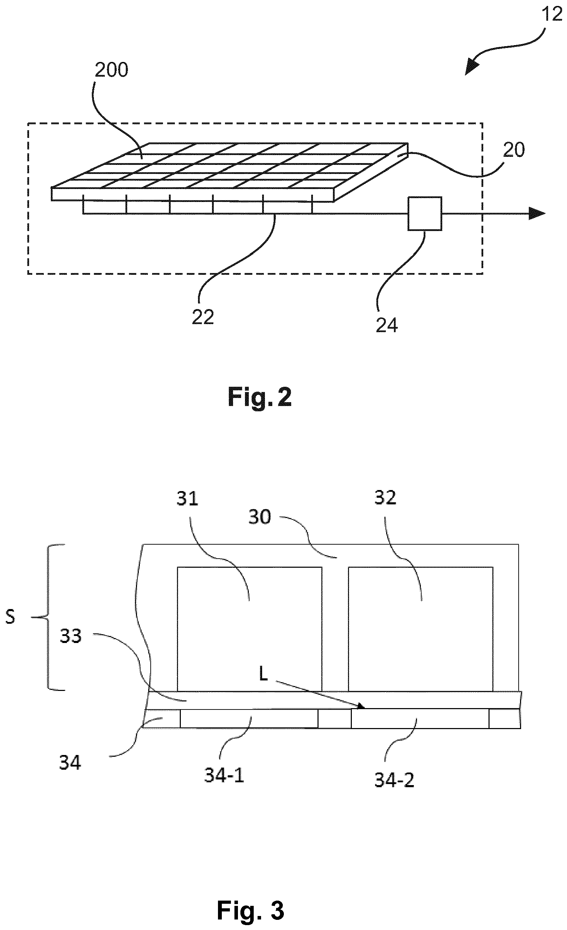

In Fig. 2 the detector arrangement 12 is further explained in more detail. The detector arrangement 12 comprises a detector panel 20, wherein the detector panel 20 comprises at least one detector 200. The multiple detectors 200 can be arranged as an array of detectors next to each other, but also as matrix or other suitable pattern. In order to provide the image information from the detectors 200 for further processing, a detector circuit 22 is provided for readout of detector information. This detector circuit 22 is connected to an interface for providing the detector information, for instance, to an external processor (not shown). The detector panel 20, the detector circuit 22, and the interface 24 are arranged within a detector housing 26. This housing 26 can provide a mechanical and structural support for accommodating the detector panel 20, the detector circuit 22, and the interface 24. In the following figures the detector 200 is now shown and explained in more detail.

Fig. 3 schematically shows a simplified view of the main components of a known X-ray detector for medical imaging. The detector comprises a scintillator array layer S with at a first 31 and a second 32 scintillator array element. An intermediate layer 33 is adapted to allow light L to pass. The array elements are embedded in a light reflector material 30 with exception of the side of the array elements facing the intermediate layer. A detection layer 34 is present with at least a first 34-1 and a second 34-2 detector pixel distanced apart from each other and configured to detect light generated in the scintillator layer. The scintillator layer, the intermediate layer, and the detection layer are arranged relative to each other such that light, which is generated in the scintillator array elements of the scintillator array layer by X-ray radiation, can propagate to the detection layer via the intermediate layer. The first scintillator array element is spatially aligned to the first detector pixel and the second scintillator array element is spatially aligned to the second detector pixel. In the event that X-rays hit, for instance, the second scintillator region 31, the incident radiation is converted to visible light L. This light L can have different directions and propagates e.g. through the scintillator array element 31. In one example, the light L propagates in direction to the detection layer 34 and towards the second detector pixel 34-2. This light L leaves the first scintillator array element 31, passes the intermediate layer 33, and is received by the second detector pixel 34-2. The second detector pixel 34-2 can then convert the incident light L into electric signals (not shown) for further processing. In this case, the incident light L, arriving at the second detector pixel 34-2, incorrectly represents an X-ray radiation event within the first scintillator array element region 31. It can be desired, in particular related to an improved image quality, that a detector pixel 34-2 only detects X-ray radiation events, which occur in the corresponding scintillator array element 32.

In other words, in the shown example, in the first scintillator array element 31 furthermore, a cross-over light L is generated. This cross-over light L is directed or is heading towards the second detector pixel 34-2.

In an example, the cross-over light L can also completely or partly scatter in the scintillator array element region 32.

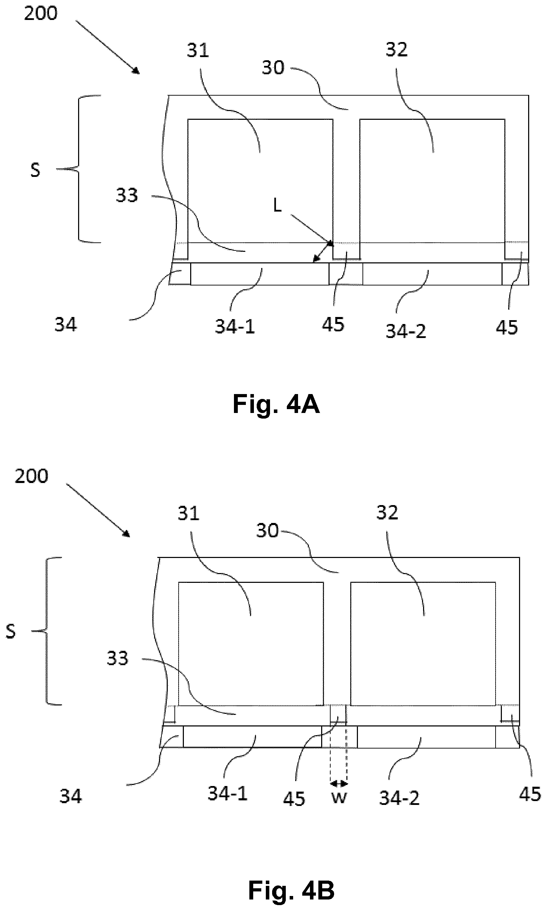

Fig. 4A further light reflector material 45 is present in contact with the intermediate layer and substantially extended towards the detection layer through the intermediate layer. Cross-over light L leaves the first scintillator array element 31 into the intermediate layer 33 and hits the further light reflecting material. Due to its light reflecting or light absorbing properties, the light reflecting material reflects or partially absorbs the cross-over light L completely or partly. This means that almost no cross-over light L propagates beyond the light reflecting material 45, or, a strength or intensity of the cross-over light L is reduced. This can help to prevent false detections of radiation events for a defined spatial region.

In one example, the cross-over light L originates in further distanced scintillator array element, for example in the scintillator layer, which is two, three, four, or more scintillator array elements away from the spatially aligned scintillator array elements 31, 32.

For scintillators, for example sintered scintillator material like Gadolinium Oxy Sulfide doped with Praesodimium and Cerium, can be applied. A typical scintillator layer thickness or height can, for instance, be in the range of 100 to 600 microns for conventional X-ray imaging. For computed tomography such a thickness can, for instance, be in the range of 1 to 2 mm, or preferably approximately 1.4 millimeters. The term "microns" relates to micrometers.

In an example the scintillator layer S comprises a plurality of optically separated scintillator array elements. In this case, the scintillator array elements 31, 32 are arranged, for example, next to each other. These scintillator array elements can have different shapes, for instance, cone-shaped, cuboids-shaped, block-shaped, or pyramid-shaped. In order to avoid cross-talk or cross-over signals between two adjacent scintillator elements, light reflecting material 30 is present in the space between two adjacent scintillator array elements.

The intermediate layer 33 can consist of a single substance or material and can be aimed to provide mechanical stability and/or bonding or optically linking the scintillator layer S to the detection layer 34. In one example, the intermediate layer 33 comprises glue or an adhesive, which is at least partly light transparent. In order to avoid attenuation of light and a thus a possible reduced detectability, the intermediate layer 33 should provide a high light transparency. This way a high sensitivity and a better contrast-noise ratio can be achieved. In opposite to other known solutions, the intermediate layer is kept light transparent as much as possible. Hereby, an attenuation of the light remains zero or at least on a low level.

The intermediate layer 33 can, in an example, be a continuous layer, which can comprise a constant thickness or height. A typical thickness can be larger than 80 µm or microns, or preferably larger than 100 microns, or even more preferred larger than 125 microns. In practice this will mean in the range of 80 to 500 microns because a larger thickness does not have any advantages. In a Low Temperature Test (LTT) whereby an array of 16 x 16 = 256 scintillator array elements was subjected to a cool down cycle to -20 degrees C the number of cracked array elements was between 12 and 51 at an intermediate layer thickness of 80 µm and between 0 and 2 at an intermediate layer thickness of 125 µm. Cracking may be measured by comparing a normalized detector signal per detector pixel corresponding to array element before and after the LTT. A cracked element will show a deviation in the normalized detector signal. In an example, the intermediate layer 33 can comprise further components, such as a conducting medium, support structures or others.

The detection layer 34 describes an arrangement of at least two detector pixels 34-1, 34-2, which can be, in an example, arranged adjacent or next to each other. The arrangement or position of the detector pixels 34-1, 34-2, should be able to reflect a spatial distribution of scintillator generated light across a projection plane. Therefore, in many cases, the detector pixels are arranged in a regular manner, for example, as a grid in a plane.

Detector pixels 34-1, 34-2 can be seen as active areas, which detect and receive light and convert it to electric signals. Examples for active areas or detector pixels 34-1, 34-2 can be photodetectors and photo sensors, in particular photodiodes.

The detector pixels 34-1, 34-2 can comprise different shapes, such as squares, rectangles, circles, and others. The surface of the detector pixels 34-1, 34-2 should cover a big portion of the overall surface of the detection layer 34, in order to collect/detect the light generated in the scintillator as efficient as possible. The detector pixels 34-1, 34-2 can be connected to further units, for instance, an interface 24 in order to further process the detected signals. Detector pixel 34-1, 34-2 sizes can be in the range of 20 to 250 micron for conventional X-ray and 1 to 1,4 mm for computed tomography.

The scintillator layer S, the intermediate layer 33, and the detection layer 34 can be arranged in different ways. For example, the scintillator layer S, the intermediate layer 33, and the detection layer 34 can be arranged as parallel layers on top of each other or superimposed. In this case the intermediate layer 33 can serve as adhesive layer mechanically connecting the scintillator layer S with the detection layer 34 via the intermediate layer 33. The layers are arranged such that light, which is generated in the scintillator layer S, can pass the intermediate layer 33 and can hit the detection layer 34 with the individual detector pixels 34-1, 34-2. An overall thickness or height of an arrangement of a scintillator layer S, and intermediate layer 33, and a detection layer 34 can be typically 1.5 mm for computed tomography and less than 1 mm for conventional X-ray.

The "spatial alignment" of the first scintillator array element 31 to the first detector pixel 34-1 and the spatial alignment of the second scintillator array element 32 to the second detector pixel 34-2 is aimed to guide light, which is generated in the particular scintillator to the assigned or corresponding detector pixel. The term "spatial" relates to a certain position of the scintillator array elements 31, 32, in relation to the corresponding detector pixels 34-1, 34-2, such that light, which is generated in a scintillator array element 31, 32, propagates to the corresponding detector pixel 34-1, 34-2, due to their spatial adjacency.

In Fig. 4B the further reflector material 45 has a width w, measured in a direction parallel to the detection layer, smaller than the space between the scintillator array elements. In an example the reflector material in the intermediate layer has a width w in the range of 50 - 90 % of the minimum space between the scintillator array elements. A width smaller than 50% of the minimum space between the scintillator array elements is undesirable because it would make the reflector too transparent for light. Spatially separated scintillator array elements can provide an advantage over continuous scintillator layers, because a strong optical separation between adjacent scintillator array elements and detector pixels can be achieved. This can allow an independent operation of neighboring scintillator array elements 31, 32, along with the corresponding detector pixels 34-1, 34-2. Spatially separated scintillator elements are often used in computed tomography. In this application cross-over light L and detection of cross-over light L in adjacent detector pixels can be of particular importance. Therefore, using a further light reflecting material 45 can therefore improve image quality. Note that the light reflecting material and the further light reflecting material also will absorb a portion of the light.

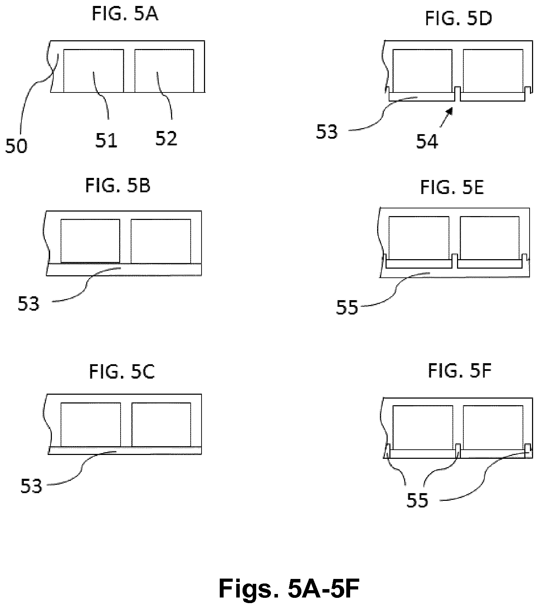

In Figs. 5A to 5F examples of some steps of a method of manufacturing an X-ray detector for medical imaging are shown.

In Fig. 5A a step of the method is shown wherein a scintillator array layer with at least a first and a second scintillator array element is provided. The array elements 51 , 52 are embedded in a light reflector material 50 with exception of the side of the array elements facing the intermediate layer;

In Fig. 5B the result of the step of applying an intermediate layer 33 on one side of the scintillator array layer, adapted to allow light to pass, in contact with the scintillator array layer.

In Fig 5C the result of the step of reducing the intermediate layer to a temporary thickness is shown.

In Fig. 5D the result of the step of structuring the intermediate layer 33 by substantially removing the intermediate layer at the position 54 of the light reflector material is shown.

In Fig. 5E the result of the step of applying further light reflector material 55 adjacent the remainder of the intermediate layer thereby filling the structure; wherein the further light reflector material is in contact with the light reflector material.

In Fig 5F the result of the step of removing excess further light reflector material and excess intermediate material from the intermediate layer to yield a final thickness of the intermediate layer is shown.

Together with the product of Fig. 5F a detection layer is provided (not shown in Fig. 5) with at least a first and a second detector pixel distanced apart from each other and configured to detect light generated in the scintillator layer. The scintillator layer, the intermediate layer, and the detection layer are arranged relative to each other such that light, which is generated in the scintillator array elements of the scintillator array layer by X-ray radiation, can propagate to the detection layer via the intermediate layer. The first scintillator region is spatially aligned to the first detector pixel and wherein the second scintillator region is spatially aligned to the second detector pixel.

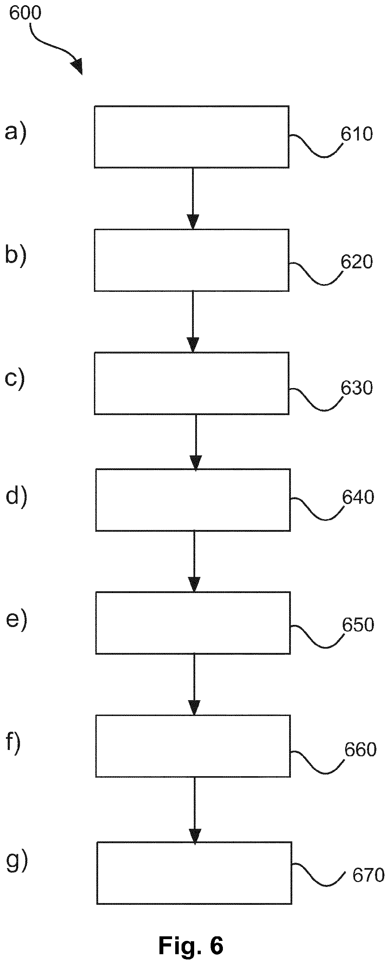

In Fig. 6 an example of a method 600 of manufacturing an X-ray detector for medical imaging is shown. The method comprising a step 610 of providing a scintillator array layer with at least a first and a second scintillator array element. In a step 620 an intermediate layer on one side of the scintillator array layer, adapted to allow light to pass, in contact with the scintillator array layer is applied. The intermediate layer comprises, for example, an epoxyIn a step 630 the intermediate layer is reduced to a temporary thickness. The array elements are embedded in a light reflector material with exception of the side of the array elements facing the intermediate layer;

In a step 640 the intermediate layer is structured by substantially removing the intermediate layer at the position of the light reflector material. The structuring is e.g. performed using sawing blades, equal or similar to the blades used for creating the scintillator array elements. The light reflector material e.g. comprises epoxy loaded with rutile titania.

In a step 650 further light reflector material is applied adjacent the remainder of the intermediate layer thereby filling the structure. The further light reflector material is in contact with the light reflector material.

In a step 660 excess further light reflector material and excess intermediate material is removed from the intermediate layer to yield a final thickness of the intermediate layer. This may, e.g., be done by grinding.

In a step 670 a detection layer is provided with at least a first and a second detector pixel distanced apart from each other and configured to detect light generated in the scintillator layer. The scintillator layer, the intermediate layer, and the detection layer are arranged relative to each other such that light, which is generated in the scintillator array elements of the scintillator array layer by X-ray radiation, can propagate to the detection layer via the intermediate layer. The first scintillator region is spatially aligned to the first detector pixel and wherein the second scintillator region is spatially aligned to the second detector pixel. Step 610 is also referred to as a), step 620 as step b), step 630 as step c), step 640 as step d), step 650 as step e), step 660 as step f), and step 670 as step g).

In an embodiment (not shown) a spacer is used to keep the intermediate layer and detection layer at a fixed distance after step 670 and comprising the following additional steps: filling the fixed distance with liquid intermediate layer material, removing the spacer, moving the intermediate layer and detection layer together to a desired distance thereby squeezing the liquid intermediate layer out, and solidifying the liquid intermediate layer by a curing step.

It has to be noted that embodiments of the invention are described with reference to different embodiments. However, a person skilled in the art will gather from the above and the following description that, unless otherwise notified, any combination between features relating to different embodiments is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An X-ray detector (200) for medical imaging, comprising:
- a scintillator array layer (S) with at least a first (31, 51) and a second (32, 52) scintillator array element;
- an intermediate layer (33, 53) adapted to allow light (L) to pass;
wherein the array elements are embedded in a light reflector material (30, 50) with exception of the side of the array elements facing the intermediate layer; and
- a detection layer (34) with at least a first (34-1) and a second (34-2) detector pixel distanced apart from each other and configured to detect light generated in the scintillator layer;
wherein the scintillator layer, the intermediate layer, and the detection layer are arranged relative to each other such that light, which is generated in the scintillator array elements of the scintillator array layer by X-ray radiation, can propagate to the detection layer via the intermediate layer;
wherein the first scintillator array element is spatially aligned to the first detector pixel and wherein the second scintillator array element is spatially aligned to the second detector pixel; and
**characterized in that** further light reflector material is present in contact with the intermediate layer and substantially extended (45, 55) towards the detection layer through the intermediate layer.

2. X-ray detector according to claim 1, wherein the intermediate layer has a thickness larger than 80 µm.

3. X-ray detector according to claims 1 or 2, wherein the intermediate layer has a thickness larger than 125 µm.

4. X-ray detector according to any of the preceding claims, wherein the further reflector material has a width (w), measured in a direction parallel to the detection layer, smaller than the space between the scintillator array elements.

5. X-ray detector according to claim 4, wherein the width is in the range of 50 - 90 % of the minimum space between the scintillator array elements.

6. X-ray detector according to any of the preceding claims, wherein the intermediate layer is a glue layer.

7. X-ray detector according to any of the preceding claims, wherein the further light reflecting material is substantially equivalent to the light reflecting material.

8. A detector arrangement (12) comprising
- a detector panel (20), wherein the detector panel comprises at least one detector according to any of the claims 1 to 7;
- a detector circuit (22) for readout of detector pixel information;
- an interface (24) for providing the detector pixel information to a processor;
- a detector housing for supporting and arranging the detector panel, the detector circuit and the interface.

9. A medical imaging system (100), comprising
- an X-ray tube (10);
- a detector arrangement (12) according to claim 8;
- a support arrangement (18) for attaching the X-ray source and the detector;
wherein the X-ray source and detector arrangement are configured and arranged to acquire image information of a region of interest (14) of an object (16).

10. Method of manufacturing an X-ray detector for medical imaging, the method comprising the steps of:
a) providing a scintillator array layer with at least a first and a second scintillator array element;
b) applying an intermediate layer on one side of the scintillator array layer, adapted to allow light to pass, in contact with the scintillator array layer;
c) reducing the intermediate layer to a temporary thickness;
wherein the array elements are embedded in a light reflector material with exception of the side of the array elements facing the intermediate layer;
d) structuring the intermediate layer by substantially removing the intermediate layer at the position of the light reflector material;
e) applying further light reflector material adjacent the remainder of the intermediate layer thereby filling the structure; wherein the further light reflector material is in contact with the light reflector material;
f) removing excess further light reflector material and excess intermediate material from the intermediate layer to yield a final thickness of the intermediate layer;
g) providing a detection layer with at least a first and a second detector pixel distanced apart from each other and configured to detect light generated in the scintillator layer;
wherein the scintillator layer, the intermediate layer, and the detection layer are arranged relative to each other such that light, which is generated in the scintillator array elements of the scintillator array layer by X-ray radiation, can propagate to the detection layer via the intermediate layer;
wherein the first scintillator region is spatially aligned to the first detector pixel and wherein the second scintillator region is spatially aligned to the second detector pixel.

11. Method according to claim 10, wherein a spacer is used to keep the intermediate layer and detection layer at a fixed distance after step g) and comprising the following additional steps:
h) filling the fixed distance with liquid intermediate layer material;
i) removing the spacer;
j) moving the intermediate layer and detection layer together to a desired distance thereby squeezing the liquid intermediate layer out;
k) solidifying the liquid intermediate layer by a curing step.

12. Method according to claim 10 or 11, wherein the desired distance is smaller than 10 µm.
